(19) Europäisches Patentamt
European Patent Office
Office européen des brevets

(11) **EP 4 503 785 A1**

(12) **EUROPEAN PATENT APPLICATION**

(43) Date of publication:
**05.02.2025 Bulletin 2025/06**

(21) Application number: **23188736.5**

(22) Date of filing: **31.07.2023**

(51) International Patent Classification (IPC):
**H04W 64/00** (2009.01)      *G01S 5/00* (2006.01)
**G01S 5/02** (2010.01)

(52) Cooperative Patent Classification (CPC):
**H04W 64/006; G01S 5/0244;** G01S 5/0072;
G01S 5/0289; H04W 92/18

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH**
**70442 Stuttgart (DE)**

(72) Inventors:
• **Hassan, Khaled Shawky**
**31157 Sarstedt (DE)**
• **Jornod, Guillaume**
**10243 Berlin (DE)**
• **Stark, Maximilian**
**20249 Hamburg (DE)**

(54) **DETERMINING A POSITION OF A TARGET USER EQUIPMENT RELATIVE TO A POSITION OF AN ANCHOR USER EQUIPMENT**

(57)    Method for determining a position of a target user equipment (UE) (50), relative to a position of an anchor UE (40), the method (10) comprising:
- setting up (11), at the target UE (50), a positioning mechanism in a higher communication layer,
- initiating (12), by the target UE (50), a sidelink communication via a sidelink positioning protocol over a sidelink interface (32) of a wireless network (31) between the target UE (50) and the anchor UE (40),
- requesting (13), by the target UE (50) and from the anchor UE (40), an absolute position of the anchor UE (40) via the sidelink interface (32),
- receiving (14), by the target UE (50) and from the anchor UE (40), positioning reference signals including the absolute position of the anchor UE (40), preferably together with uncertainty information regarding the absolute position, via the sidelink interface (32),
- assessing (15), at the target UE (50), a distance to the anchor UE (40) based on signal run times of the positioning reference signals,
- calculating (16), at the target UE (50), its position relative to the anchor UE (40) based on the assessment together with an estimate of a measurement error,
- requesting (17), by the target UE (50), its absolute position from a higher layer,
- determining (18), by the target UE (50), the relative position of the target UE (50) with respect to the anchor UE (40), preferably together with an estimate of a measurement error, using the absolute position of the target UE (50) and the absolute position of the anchor UE (40),
- updating (20), at the target UE (50), inputs of the positioning mechanism with the calculated relative position and with the determined relative position.

**Fig. 2**

**Description**

Background

A wireless communication device also named mobile device or user equipment (UE) communicates with a base station of a wireless network or communicates directly with another UE. The UE can be a portable cellular device or a vehicle such as an automobile or an ebike. The UE can also be a Secure User Plane Location (SUPL) Enabled Terminal. When the UE is a vehicle the device-to-device (D2D) communication can be referred to as vehicle-to-vehicle (V2V) communication. Other vehicle-based UE communications include vehicle-to-infrastructure (V2I), vehicle-to-network (V2N), and vehicle-to-pedestrian (V2P).

For some applications, it is important to obtain a location of a U E through a wireless communication system even in the absence of support from a Global Navigation Satellite System (GNSS) such as GPS, Galileo or GLONASS. For example, this may apply for a UE that is located in an urban canyon. Then, further systems for locating a mobile device reliably and quickly are needed.

Sidelink is one of the core technologies of the 5G system that enables direct communication between two UEs without access to the wireless network. The 3GPP Sidelink Positioning Protocol (SLPP) allows for position data exchange between UEs via the sidelink interface.

Summary

A first aspect of the present disclosure relates to a method for determining a position of a first user equipment, UE, relative to a position of a second UE.

The method of the present disclosure includes:

- setting up, at the target UE, a positioning mechanism in a higher communication layer,
- initiating, by the target UE, a sidelink communication via a sidelink positioning protocol over a sidelink interface of a wireless network between the target UE and the anchor UE,
- requesting, by the target UE and from the anchor UE, an absolute position of the anchor UE via the sidelink interface,
- receiving, by the target UE and from the anchor UE, positioning reference signals including the absolute position of the anchor UE, preferably together with uncertainty information regarding the absolute position, via the sidelink interface,
- assessing, at the target UE, a distance to the anchor UE based on signal run times of the positioning reference signals,
- calculating, at the target UE, its position relative to the anchor UE based on the assessment together with an estimate of a measurement error,
- requesting, by the target UE, its absolute position from a higher layer,
- determining, by the target UE, the relative position of the target UE with respect to the anchor UE, preferably together with an estimate of a measurement error, using the absolute position of the target UE and the absolute position of the anchor UE,
- updating, at the target UE, inputs of the positioning mechanism with the calculated relative position and with the determined relative position.

A second aspect of the present disclosure relates to a user equipment adapted to communicate in sidelink communication via a sidelink positioning protocol over a sidelink interface of a wireless network, comprising a positioning mechanism in a higher communication layer and adapted to perform the method according to the first aspect (or an embodiment thereof).

A third aspect of the present disclosure relates to a computer system adapted to perform the method according to the first aspect (or an embodiment thereof).

A fourth aspect of the present disclosure relates to a computer program omprising instructions which, when the program is executed by a computer, cause the computer to perform the method according to the first aspect (or an embodiment thereof).

A fifth aspect of the present disclosure relates to a computer readable medium or signal storing and/or containing the computer program according to the third aspect (or an embodiment thereof).

The technique of the first to fifth aspects can have advantageous technical effects.

Firstly, the techniques of the present disclosure propose for a target U E which does not have precise positioning (e.g. GNSS in urban canyon) but is able to use 3GPP sidelink positioning (SLPP) to request an anchor UE to provides location information. It is proposed to use two relative position measurements from different channels to find a better estimate of the actual relative position of the target UE.

Secondly, the techniques of the present disclosure provide a higher level or L3 mechanism such as a filter in the UE's L3 functionalities allow the sidelink location management function (SLMF) to use local sensors (e.g., speed sensor, GNSS if available) together with pieces of information obtained from SLPP (relative position to the anchor UE, absolute position of the anchor UE). The filter is updated to improve the estimate of the relative position between the two UEs. Thus, the filter combines different measurements together.

Thirdly, the techniques of the present disclosure allow generation of precise location data from measurements with low accuracy by incorporating further information from the UE like for example the GNSS location.

Fourthly, the techniques of the present disclosure allow efficient use of information provided in the sidelink location management function (SLMF) and efficient location of the SLMF.

Some terms are used in the present specification in the following manner: The term "OSI layer" may refer to one of the seven layers of the OSI model. The Open Systems Interconnection model (OSI model) is a conceptual model from the International Organization for Standardization (ISO). In the OSI model, the communications between a computing system are split into seven different abstraction layers: Physical, Data Link, Network, Transport, Session, Presentation, and Application, wherein the physical layer is the lowest layer.

The term "positioning filter" or "L3 (layer 3) filter" may refer to a linear filter, an Extended Kalman Filter (EKF), a particle filter (sequential Monte Carlo methods) or the like which is arranged in the third (network) layer according to the OSI model. Thus, the L3 filter is independent from L1 and L2 operation so that L1/L2 values e.g. obtained from SLPP are input in the L3 filter. The filter is adapted for measurement hand-over from higher level to lower level and vice versa i.e. to inter-layer signaling. The filter has coefficients and is input in the time domain.

The filter may be implemented as an FIR filter as shown below.

$$F\_n = (1\text{-}a).F\_\{n\text{-}1\}+a.M\_n$$

In this example, a possible structure of the FIR filter includes:

M_n is the latest measurement received from lower layers in state n (n is the current time state),
F_n is the updated measurement result in state n,
F_{n-1} is the filter measurement result in the previous state n-1,
a is the filter coefficient.

An example of measurement of the filter can be:
Channel quality and Receive Strength Signal Indicator (RSSI) measurements, wherein a L3 filter may average about RSSI values based on individual RSSI measurements.

Positioning, where the filter updates and enhances the positioning based on existent measurements from multiple sources.

The filter may be implemented as a continuous-time Extended Kalman Filter as shown below.

Model

$$\dot{\mathbf{x}}(t) = f\big(\mathbf{x}(t), \mathbf{u}(t)\big) + \mathbf{w}(t) \qquad \mathbf{w}(t) \sim \mathcal{N}\big(\mathbf{0}, \mathbf{Q}(t)\big)$$

$$\mathbf{z}(t) = h\big(\mathbf{x}(t)\big) + \mathbf{v}(t) \qquad \mathbf{v}(t) \sim \mathcal{N}\big(\mathbf{0}, \mathbf{R}(t)\big)$$

Initialize

$$\hat{\mathbf{x}}(t_0) = E\big[\mathbf{x}(t_0)\big], \mathbf{P}(t_0) = Var\big[\mathbf{x}(t_0)\big]$$

Predict-Update

$$\dot{\hat{\mathbf{x}}}(t) = f\big(\hat{\mathbf{x}}(t), \mathbf{u}(t)\big) + \mathbf{K}(t)\big(\mathbf{z}(t) - h\big(\hat{\mathbf{x}}(t)\big)\big)$$

$$\dot{\mathbf{P}}(t) = \mathbf{F}(t)\mathbf{P}(t) + \mathbf{P}(t)\mathbf{F}(t)^T - \mathbf{K}(t)\mathbf{H}(t)\mathbf{P}(t) + \mathbf{Q}(t)$$

$$\mathbf{K}(t) = \mathbf{P}(t)\mathbf{H}(t)^T \mathbf{R}(t)^{-1}$$

$$\mathbf{F}(t) = \frac{\partial f}{\partial \mathbf{x}}\bigg|_{\hat{\mathbf{x}}(t),\mathbf{u}(t)}$$

$$\mathbf{H}(t) = \frac{\partial h}{\partial \mathbf{x}}\bigg|_{\hat{\mathbf{x}}(t)}$$

In this model, the motion of the UEs can be captured in the model (x'(t)=....) and its respective error w(t) and the measurements (relative / absolute) in z(t) with respective error v(t). The predict/update step is depending on the filter but the ultimate goal is to improve the estimate of the relative position between the two UEs.

Q and R are covariances and u is the control vector. P is the covariance estimate. K is the Kalman gain. F and H are the state transition and observation Jacobians matrices.

Description of the Figures

Fig. 1 is a flow diagram illustrating a method for determining a position of a first user equipment relative to a position of a second user equipment according to the first aspect.
Fig. 2 shows schematically a possible topology of the present techniques.
Fig. 3 shows schematically a possible communication of a possible topology of the present techniques.
Fig. 4 shows schematically a possible communication of a possible topology of the present techniques.

Detailed Description

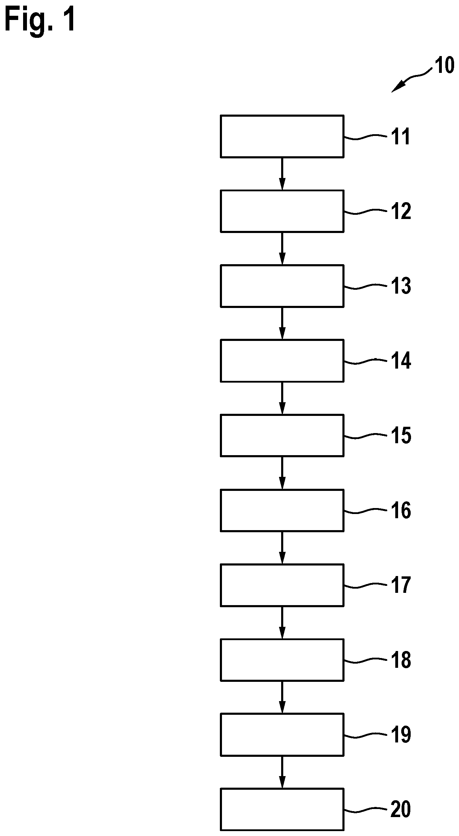

**Fig. 1** is a flow diagram of a method 10 according to the first aspect for determining a position of a target user equipment, UE, relative to a position of an anchor UE. The method allows for precise relative positioning using a relative position to an anchor point or UE and local sensors by means of filtering. The method may be performed in part or in total by the target UE.

First, a setting up 11 of a positioning mechanism such as a positioning filter in a higher communication layer is performed at the target UE. The positioning filter may be set up in layer 3 of the OSI model. The filter or one or more of its coefficients may use initialization values from a wireless network like a 5G network. The filter includes computational capabilities and inter-layer signaling capabilities for combining different measurements together. Thus, the positioning or L3 filter is independent from L1 and L2 operation so that L1/L2 values e.g. obtained from SLPP are input in the L3 filter.

Next, an initiating 12 is performed by the target UE, in which a sidelink communication is initiated via a sidelink positioning protocol over a sidelink interface of a wireless network between the target UE and the anchor UE.

Then, a requesting 13 is performed by the target UE thereby requesting from the anchor UE an absolute position of the anchor UE via the sidelink interface. The 3GPP Sidelink Positioning Protocol (SLPP) allows for position data exchange between UEs via the sidelink interface.

A receiving 14 is performed by the target UE thereby receiving from the anchor UE positioning reference signals including the absolute position of the anchor UE together with uncertainty information regarding the absolute position via the sidelink interface. The uncertainty information may include an ellipse of uncertainty around the position of the anchor UE. And the position of the anchor UE may be an ellipsoid point.

Then assessing 15 is performed at the target UE, in which a distance to the anchor UE based on signal run times of the positioning reference signals is assessed. Further, the assessing may be further based on an angle of arrival of the positioning reference signals.

Next, a calculating 16 is performed at the target UE, in which its position relative to the anchor UE is calculated based on the assessment together with an estimate of a measurement error. The position of the target UE may be calculated in polar coordinates. The measurement error may be obtained by an error propagation calculation, a stochastic model or statistical parameters of an error distribution.

Then, a requesting 17 is performed by the target UE, thereby requesting its absolute position from a higher layer, for example its GNSS location coordinates.

A determining 18 is performed by the target UE, thereby determining the relative position of the target UE with respect to the anchor UE together with an estimate of a measurement error using the absolute position of the target UE and the absolute position of the anchor UE. The measurement error may be obtained by an error propagation calculation, a stochastic model or statistical parameters of an error distribution.

Then, a calculating 19 is performed at the target UE, thereby calculating errors of the calculated relative position and/or of the determined relative position based on the uncertainty information and/or the measurement errors for the calculation, respectively. That is, in other words, a utilizing 19 is performed at the target UE, thereby utilizing the uncertainty information and/or the measurement errors for the calculation of the calculated relative position and of the determined relative position, respectively. It is also possible to utilize the uncertainty information and/or the measurement errors in the respective steps above.

Lastly, an updating 20 is performed at the target UE, thereby updating inputs of the positioning filter with the calculated relative position and with the determined relative position. The update depends on filter used which may be an EKF. Here, the inputs of the positioning mechanism are further updated with the calculated errors of the calculated relative position and/or of the determined relative position. The steps above may be processed iteratively, i.e., in a loop. The middle steps 12 to 19 may be seen as preparation of the data for the update of the filter which is performed in steps 11 and 20. In step 11, a first, initial setup may be performed. After step 19, the filter is then updated or re-initialized according to steps 20 and 11.

The output of the filter is a more accurate relative position of the target UE with respect to the anchor UE optionally in polar coordinates. This relative position is getting more and more precise with each iteration of the filter.

Additionally, if arrival resolution of the angle of arrival (AoA) is too bad or is not available the positioning filter may compensate for the missing or bad information by absolute location coordinates conveyed by SLMF (of the anchor UE) and the target UE higher layers. Additionally, when the target UE is not capable of angle resolution, for example due to its implemented antennas/antenna-array, the SLMF of the target UE (or the network, if the network is configuring the SLMFs) configures the filter to overcome the AoA computations. This can be achieved for example by changing the filter coefficients of the AoA values.

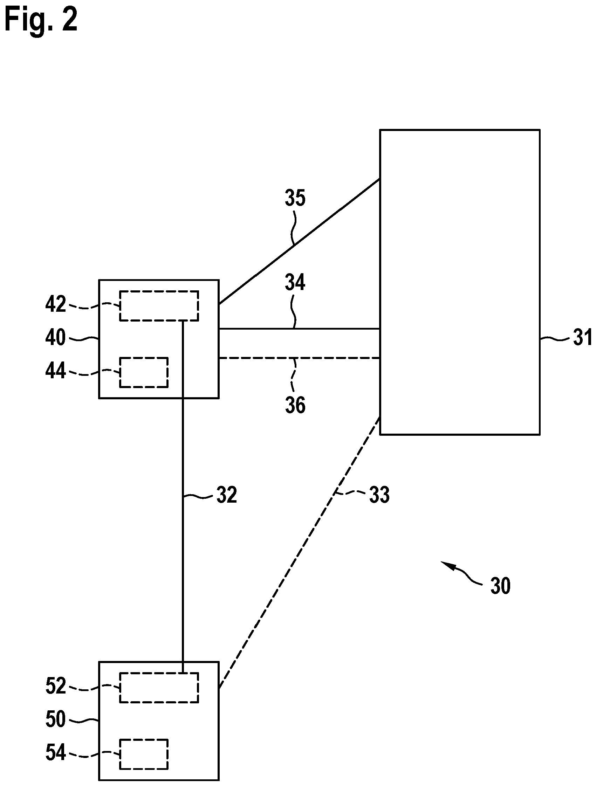

**Fig. 2** shows schematically a possible topology of the present techniques implemented in a system 30. The system 30 may be a computing system according to the third aspect adapted to perform the method described above.

The system 30 includes a wireless network 31 or is part of the wireless network 31. The wireless network 31 may be a wireless communication network according to one of the 3GPP standards like for example 5G. The wireless network 31 includes one or more Via stations which are not depicted for the ease of understanding. The wireless network 31 may include a gNB and a ng-eNB.

The system 30 further includes an anchor UE 40 and a target UE 50. The anchor UE 40 may be the vehicle like a car. The target UE 50 may be a further vehicle like for example in E bike. The anchor UE 40 includes a sidelink location management function 42 (SLMF) for managing 3GPP sidelink positioning (SLP). The anchor UE 40 further includes an application layer or an application 44. The target UE 50 includes a sidelink location management function 52 for managing 3GPP sidelink positioning and an application layer or an application 54. The target UE 50 and the anchor UE 40 can communicate via a sidelink positioning protocol (SLPP) over a sidelink interface 32 of the wireless network 31. The target UE 50 and the anchor UE 40 can request and exchange their respective positions and further location information via the site link interface 32.

The target UE 50 can communicate with the wireless network 31 via an NR-Uu interface 33. The NR-Uu interface 33 connects the UE 50 to a gNB of the wireless network 31 over the air. The N R-Uu interface 33 is used as one of several transport links for the LTE Positioning Protocol for a target UE with NR access to NG-RAN. In a similar way, the anchor UE 40 communicates with the wireless network 31 via an N R-Uu link or interface 34. Further, the anchor UE 40 may communicate via an LTE-Uu interface 35 with the wireless network 31. The LTE-Uu interface connects the UE to an eNode B of the wireless network 31 over the air and is used as one of several transport links for the LTE Positioning Protocol.

The anchor UE 40 has a further (S)LPP connection 36 with a gNB of the wireless network 31. The connection 36 implements the 3GPP Sidelink Positioning Protocol (SLPP) or the LTE Positioning Protocol (LPP).

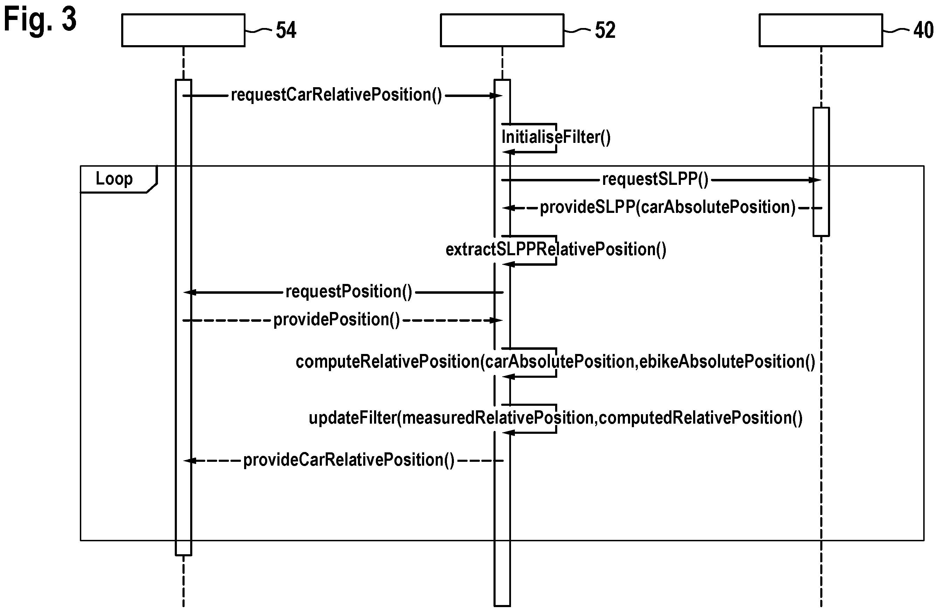

**Fig. 3** shows schematically a possible communication of a possible topology of the present techniques. The communication is described between the anchor UE 40 for example being a car and the target UE 50 for example being an E bike. For the target U E 50, the communication is described for the sidelink location management function 52 and one or more applications 54 of the target UE 50. The communication includes reporting of non-RAT measurements towards lower layers.

The communication between the anchor UE 40 and the sidelink location management function 52 takes place at layers 1 and 2 of the OSI model. The sidelink location management function 52 and with it the positioning filter is located or organized at layer three. The communication between the application 54 and the sidelink location management function 52 takes place at higher layers i.e. above layer 3. The computations are performed in the sidelink location management function 52 in the 3GPP stack.

At the start, the application 54 requests the relative position of the target UE 50 in relation to the anchor UE 40 from the sidelink location management function 52. Next, the filter is initialized at the management function 52. In coverage of the wireless network, the sidelink location management function 52 can be inherited from the network. Then, the configuration of filters, requested possible information gathering, and data collection policies can be directly configured by the network. If the target UE 50 is out of network coverage a sidelink location management function 52 can be initiated by pre-configuration in which values are configured. These values are configured either off-line from when the UE was connected or via software updates. Such configuration should include possible coefficient configurations of the filter.

Then, SLPP signaling is requested from the sidelink location management function 52 to the anchor UE 40. The anchor UE 40 provides its absolute position via SLPP signaling. Thereby, the sidelink location management function 52 is provided with the anchor UE's local coordinate information like for example GNSS coordinates or ellipsoid points. This SL positioning report further includes possible errors or uncertainties like for example an ellipsoid point with an uncertainty ellipse.

From the SL positioning report the sidelink location management function 52 extracts the relative position of the target UE 50 in relation to the anchor UE 40.

Next, the sidelink location management function 52 requests the position of the target UE 50 from the application 54. The position of the target UE 50 is provided by the application 54 to the sidelink location management function 52.

Then, the sidelink location management function 52 computes its relative position based on the absolute position of the anchor UE 40 which has been received from the target UE 50 with the SL positioning report and based on the absolute position of the target UE 50 which has been received from the application 54.

Next, the sidelink location management function 52 updates the filter with the measured or extracted relative position which is based on the SL positioning report and with the computed relative position which is based on the position provided from the application 54. One or more coefficients of the filter are updated in order to improve the precision of the filter.

The filter outputs an estimation or the next iteration of the relative position with respect to the anchor UE 40 to the application 54. The actions performed after initializing the filter are performed in a loop so that the relative position of the target U E 50 with regard to the anchor U E 40 is iterated to a precise position. The iteration is achieved by the filter or more precisely by updating or adapting the filter coefficients.

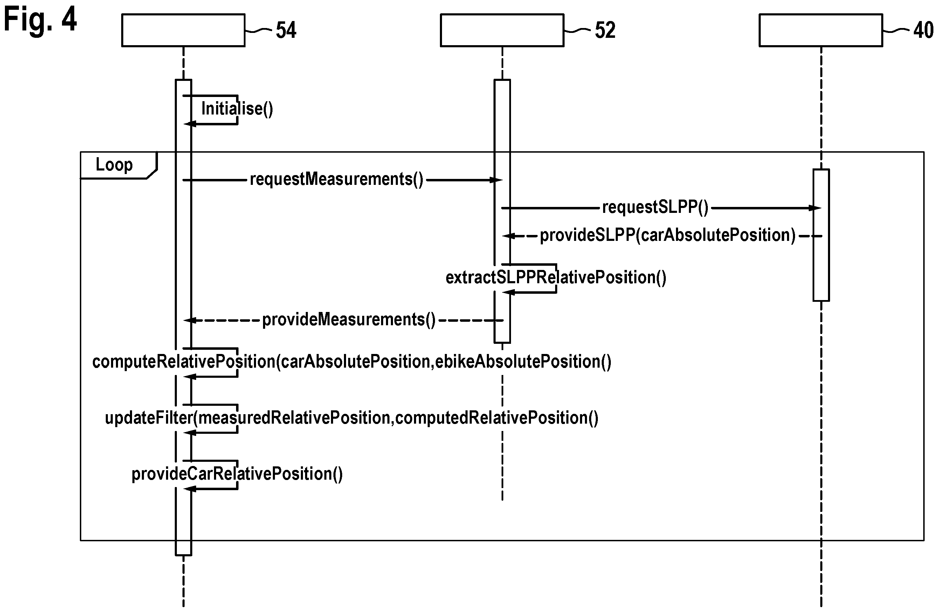

**Fig. 4** shows schematically a possible communication of a possible topology of the present techniques. The communication is described between the anchor UE 40 for example being a car and the target UE 50 for example being an E bike. For the target U E 50, the communication is described for the sidelink location management function 52 and one or more applications 54 of the target UE 50. The communication encompasses reporting including measurement reports towards higher layers.

In contrast to Fig. 3, the sidelink location management function 52 is an entity, which has an interface to the SL measurements and enables a crosslayer API to trigger and collect respective requests/measurements. The computations are done at higher layers e.g., application layers. The positioning filter is located or organized at these or this higher layer. The measurements reports i.e. the relative position of the target UE 50 to the anchor UE 40, the absolute position of the anchor UE 40 and their measurement errors are requested by the application 54 and reported to the application 54 through appropriate inter-layer signaling.

At the start, the filter is initialized at the application 54. In coverage of the wireless network, the configuration of filters, requested possible information gathering, and data collection policies can be directly configured by the network. If the target UE 50 is out of network coverage these values are configured either off-line from when the UE was connected or via software updates. Such configuration should include possible coefficient configurations of the filter.

Next, the application 54 requests measurements from the sidelink location management function 52. The requested measurements include the relative position of the target U E 50 to the anchor U E 40, the absolute position of the anchor UE 40 and their measurement errors.

In response, SLPP signaling is requested from the sidelink location management function 52 to the anchor UE 40. The anchor UE 40 provides its absolute position via SLPP signaling. Thereby, the sidelink location management function 52 is provided with the anchor UE's local coordinate information like for example GNSS coordinates or ellipsoid points. This SL positioning report further includes possible errors or uncertainties like for example an ellipsoid point with an uncertainty ellipse.

From the SL positioning report the sidelink location management function 52 extracts the relative position of the target UE 50 in relation to the anchor UE 40.

Then, the sidelink location management function 52 provides the application 54 with the requested measurements. The requested measurements include the relative position of the target UE 50 to the anchor UE 40, the absolute position of the anchor UE 40 and their measurement errors.

Next, the application 54 computes its relative position based on the absolute position of the anchor UE 40 which has been received from the target UE 50 with the SL positioning report and based on the absolute position of the target UE 50 which is available in or to the application 54.

Next, the application 54 updates the filter with the measured or extracted relative position which is based on the SL positioning report and with the computed relative position which is based on the position known in the application 54. One or more coefficients of the filter are updated in order to improve the precision of the filter.

The filter provides an estimation or the next iteration of the relative position with respect to the anchor UE 40 to application 54. The actions performed after initializing the filter are performed in a loop so that the relative position of the target U E 50 with regard to the anchor U E 40 is iterated to a precise position. The iteration is achieved by the filter or more precisely by updating or adapting the filter coefficients.

**Claims**

1. Method for determining a position of a target user equipment (UE) (50), relative to a position of an anchor UE (40), the method (10) comprising:

   - setting up (11), at the target UE (50), a positioning mechanism in a higher communication layer,
   - initiating (12), by the target UE (50), a sidelink communication via a sidelink positioning protocol over a sidelink interface (32) of a wireless network (31) between the target UE (50) and the anchor UE (40),
   - requesting (13), by the target UE (50) and from the anchor UE (40), an absolute position of the anchor UE (40) via the sidelink interface (32),
   - receiving (14), by the target UE (50) and from the anchor UE (40), positioning reference signals including the absolute position of the anchor UE (40), preferably together with uncertainty information regarding the absolute position, via the sidelink interface (32),
   - assessing (15), at the target U E (50), a distance to the anchor U E (40) based on signal run times of the positioning reference signals,
   - calculating (16), at the target UE (50), its position relative to the anchor UE (40) based on the assessment together with an estimate of a measurement error,
   - requesting (17), by the target UE (50), its absolute position from a higher layer,
   - determining (18), by the target UE (50), the relative position of the target UE (50) with respect to the anchor UE (40), preferably together with an estimate of a measurement error, using the absolute position of the target UE (50) and the absolute position of the anchor UE (40),
   - updating (20), at the target UE (50), inputs of the positioning mechanism with the calculated relative position and with the determined relative position.

2. Method according to claim 1, further comprising:
   calculating (19), at the target UE (50), errors of the calculated relative position and/or of the determined relative position based on the uncertainty information and/or the measurement errors for the calculation, respectively, wherein the inputs of the positioning mechanism are further updated with the calculated errors of the calculated relative position and/or of the determined relative position.

3. Method according to claim 1 or 2, wherein the positioning mechanism is a positioning filter.

4. Method according to claim 3, wherein the positioning filter is set up in layer three of OSI (Open Systems Interconnection) layers.

5. Method according to claim 3 or 4, wherein setting up the positioning filter includes receiving at least one filter coefficient of the positioning filter and/or at least one filter input from the wireless network (31).

6. Method according to one of claims 1 to 5, wherein the uncertainty information includes an ellipse of uncertainty around the position of the anchor UE (40).

7. Method according to one of claims 1 to 6, wherein assessing (15) the distance to the anchor UE (40) is further based on an angle of arrival of the positioning reference signals.

8. Method according to one of claims 1 to 7, wherein the method steps are performed in an application layer of the target UE (50), wherein the application layer and a sidelink location management function (SLMF) (52) communicate through inter-layer signaling.

9. Method according to one of claims 1 to 7, wherein the method steps are performed in the SLMF in a stack of the wireless network (31).

10. User equipment adapted to communicate in sidelink communication via a sidelink positioning protocol over a sidelink interface (32) of a wireless network (31), comprising a positioning mechanism in a higher communication layer and adapted to perform the method according of any one of claims 1 to 9.

11. Computing system (30) adapted to perform the method according of any one of claims 1 to 9.

12. Computer program comprising instructions which, when the program is executed by a computer, cause the computer to perform the method according to any one of claims 1 to 9.

13. Computer readable medium or signal storing and/or containing the computer program according to claim 12.

# Fig. 1

# Fig. 2

# Fig. 3

54 — 52 — 40

requestCarRelativePosition()

InitialiseFilter()

Loop

requestSLPP()

provideSLPP(carAbsolutePosition)

extractSLPPRelativePosition()

requestPosition()

providePosition()

computeRelativePosition(carAbsolutePosition,ebikeAbsolutePosition())

updateFilter(measuredRelativePosition,computedRelativePosition()

provideCarRelativePosition()

EP 4 503 785 A1

# Fig. 4

**EUROPEAN SEARCH REPORT**

Europäisches
Patentamt
European
Patent Office
Office européen
des brevets

Application Number

EP 23 18 8736

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | 5GAA: "System Architecture and Solution Development; High-Accuracy Positioning for C-V2X 5GAA Automotive Association Technical Report", , 9 February 2021 (2021-02-09), XP093055441, Retrieved from the Internet: URL:https://5gaa.org/content/uploads/2021/02/5GAA_A-200118_TR_V2XHAP.pdf [retrieved on 2023-06-19] * chapters 3.1, 4.1, 6.3, 7.1, 7.5, 7.6.1-7.6.3, 8.3, 9 * | 1-13 | INV. H04W64/00 ADD. G01S5/00 G01S5/02 |

TECHNICAL FIELDS SEARCHED (IPC)

H04W
G01S

The present search report has been drawn up for all claims

| Place of search | Date of completion of the search | Examiner |
|---|---|---|
| Berlin | 10 January 2024 | Rosken, Wilfried |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)